# EUROPEAN PATENT APPLICATION

(11) **EP 0 600 841 A1**
(43) Date of publication of application: **08.06.1994**
(21) Application number: 93830325.2
(22) Date of filing: 23.07.1993
(51) Int. Cl.: F16P 3/14, F16P 3/22, B28D 1/32

(54) **Accident-preventing control device for oil-operated presses and the like, in particular for stone-breaking workings**

(30) Priority: 04.12.1992 IT MI922784; 08.07.1993 IT MI930557 U
(71) Applicant: STEINEX S.r.l., I-38056 Levico Terme (Trento) (IT)
(72) Inventor: Stenico, Flavio, Fornace (Trento) (IT)
(74) Representative: Righetti, Giuseppe

(57) **Abstract**

The accident-preventing control device (1) for oil-operated presses and the like, in particular for stone-breaking workings, comprises at least one sensing unit (11) exhibiting at least one active portion defined by an optoelectric detector (35) located close to a lower end of an operating head (4) associated with the press (2) and vertically movable upon the action of an oil-operated cylinder (6). The optoelectric detector (35) is adapted to send a stop signal to the oil-operated cylinder (6) actuating the operating head (4), in the presence of an obstacle during the work stroke of the head. A pair of enabling members (18) requiring the intervention of the operator's two hands start up the oil-operated cylinder (6) again, for completing the work stroke of the operating head.

## Description

The present invention relates to an accident-preventing control device for oil-operated presses and the like, in particular for stone-breaking workings, said presses being of the type comprising a fixed base provided with a workbench on which a workpiece is disposed, an operating head engaged to said fixed base and vertically movable with a reciprocating motion consisting of a downward work stroke against the workpiece and an upward return stroke; actuating means for the operating head; and a control pedal for said actuating means.

It is known that oil-operated presses and in particular shearing machines adapted to break natural and artificial stones are divided into two types, respectively referred to as "gooseneck-shaped presses" for making stone cubes and "pillar presses" with two or four pillars for making large-sized slabs or blocks. Both types of presses comprise at least one operating head engaged to a fixed press base and vertically movable with a reciprocating motion consisting of a downward work stroke against one or more workpieces and an upward return stroke.

The operating head is reciprocated by actuating means comprising for example at least one oil-operated cylinder.

In the specific case of shearing machines for stone block-breaking workings, an upper blade or cutting tool is engaged to the operating head, which blade in cooperation with a lower blade emerging from the workbench and possibly driven by a second oil-operated cylinder, penetrates into the blocks and slits them according to substantially vertical surfaces.

Generally, said shearing machines for stone-breaking workings, above all if they are of the type adapted to form stone cubes in which the stone material is manually handled and put onto the benchwork, are provided with a pedal for controlling the actuating means of the operating head. This control pedal enables the operator to have both hands free, for positioning the small stone blocks for example, so that the machine output may be increased. Due to the fact that this working is very dangerous and since increasingly more restrictive safety regulations are imposed, in machines of the known type the control pedal has been often replaced by a pair of pushbuttons, disposed on the operating head for example, and adapted to oblige an operator to engage both hands in contact therewith while the operating head is carrying out its work stroke.

However, the use of this known accident-preventing control device has the important drawback of greatly reducing the output of the oil-operated presses to which it is applied. In fact, the operator's hands are engaged on the control pushbuttons over the whole work stroke of the operating head and therefore over an important period of time, which will prevent the operator from accomplishing other operating steps. It may sometimes happen that when the control pedal is still present, an operator, driven by a need to increase his work rates, will restore operation of same, thereby making the newly introduced accident-preventing measures fruitless.

Under this situation the technical task underlying the present invention is to provide an accident-preventing control device for oil-operated presses and the like, in particular for stone-breaking workings, capable of substantially obviating the above drawbacks.

Within the scope of this technical task, it is an important object of the invention to provide an accident-preventing control device for oil-operated presses and the like enabling a complete work safety to be ensured to the press operators, while making said machines work at high production rates.

The technical task mentioned and the object specified are substantially achieved by an accident-preventing control device for oil-operated presses and the like, in particular for stone-breaking workings, characterized in that it comprises:
- at least one sensing unit comprising at least one active portion disposed close to a lower end of said operating head, said sensing unit sending a stop signal to said actuating means in the presence of an obstacle interferring with said first active portion during said work stroke, and
- a pair of enabling members disposed spaced apart from said lower end of the operating head and activating said actuating means again, upon intervention of the operator's both hands in order to complete said work stroke of the operating head.

The description of some preferred embodiments of an accident-preventing device in accordance with the invention is now given hereinafter by way of non-limiting examples with reference to the accompanying drawings, in which:
- Fig. 1 is a front elevational view of one embodiment of an accident-preventing control device applied to an oil-operated press for stone-breaking workings;
- Fig. 2 is a side view of the device and press of Fig. 1;
- Figs. 3 and 4 show the device and press of Fig. 2 at subsequent operating steps;
- Fig. 5 is a sectional view taken along line V-V in Fig. 1;
- Figs. 6, 7 and 8 are side views of another embodiment of the accident-preventing control device of the invention at subsequent operating steps of the press to which it is applied;
- Fig. 9 is a side view of a preferred embodiment of the device of the invention; and
- Fig. 10 is a sectional view taken along plane X-X in Fig. 9.

Referring to the drawings, the accident-preventing control device has been generally identified by reference numeral 1.

By way of example, it is applied to an oil-operated press 2 adapted to break workpieces 3 such as stones, for producing stone cubes.

The oil-operated press 2 is conventionally provided with a base 30 on which a workbench 31 is defined which is designed to receive said workpieces 3 resting thereon. Integrally engaged with the base 30 is a vertical pillar 32 from which a horizontal support arm 33 extends in cantilevered fashion and an operating head 4 is mounted to an end 33a of said arm.

The operating head 4, to which an upper blade 5 is applied, is made vertically movable by actuating means defined by an oil-operated cylinder 6 operatively interposed between said head and the horizontal supporting arm 33. The operating head 4 carries out a reciprocating motion formed of a downward work stroke against the workpiece 3 and an upward return stroke. A control pedal 7, if depressed, enables an oil-operated cylinder 6 to be actuated, thereby imposing the downward displacement of the operating head 4.

A lower blade 10 emerges from the workbench 31, which blade is adapted to cooperate with the upper blade 5 when a stone-breaking operation is being carried out.

The lower blade 10 cooperates with the upper blade 5 following lowering of the workbench itself, against the action of a supporting hydraulic cylinder 9 or as a result of lifting of the blade 10.

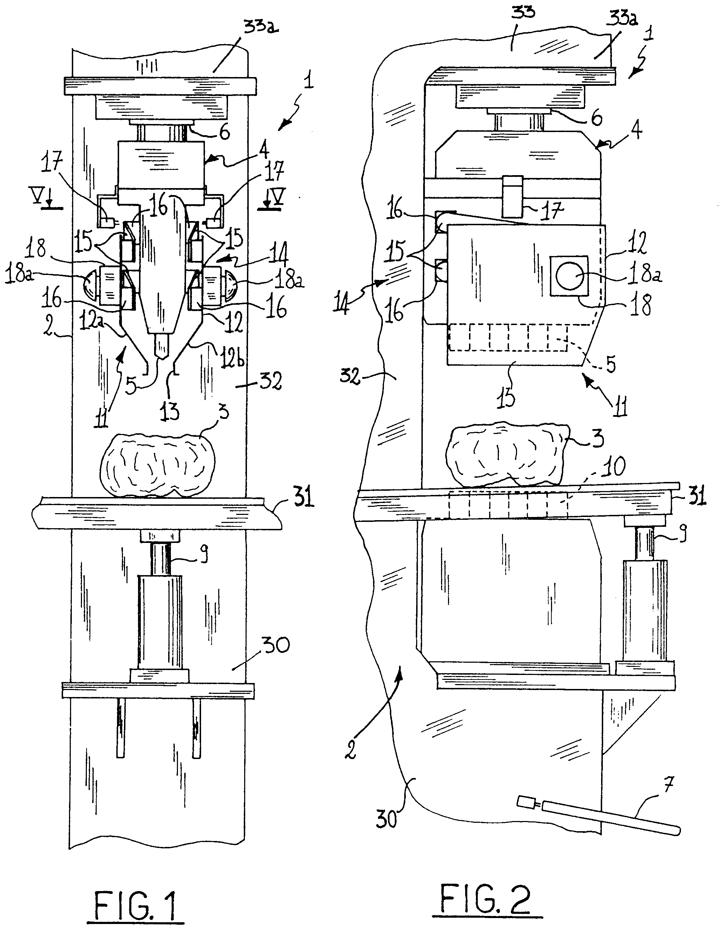

The accident-preventing control device 1, shown in one embodiment in Figs. 1, 2, 3 and 4, comprises one sensing unit 11, in turn comprising a protection case 12 for the operating head 4 extending at the lowermost area of said head. In particular, the case 12 exhibits at the lower part thereof, an edge band 13 disposed close to a lower end of the operating head 4 and sideways enclosing the upper blade 5.

The edge band 13 defines one active portion of the first sensing unit 11. Said first sensing unit, in the presence of any obstacle interferring with the edge band 13 during the work stroke of the operating head 4, is adapted to send a stop signal to the oil-operated cylinder 6 that immediately stops lowering of the operating head 4.

More particularly, the edge band 13 of the protection case 12 projects downwardly, for example some centimetres, from the lower end of the operating head 4, being therefore located at an advanced position with respect to the upper blade 5 during the downward work stroke of the latter.

The protection case 12 is engaged to the operating head 4 by connecting means 14 comprising connecting rods 15 and rotating engagement members 16 provided with elastically yielding elements acting in a torsional direction. The rotating engagement members 16 are located between the case 12 and first end portions of the connecting rods 15 and between the operating head 4 and second end portions of said connecting rods.

Practically, the connecting means 14 enables the edge band 13, and therefore the whole case, to be retracted with respect to the operating head 4 upon contact of the edge band itself 13 with any hindrance, a hand or the workpiece, for example. Since the rotating engagement members 16 are provided with elastically yielding elements acting in a torsional direction, retraction of the edge band 13 takes place against the action of the elastic resistance offered by the engagement members 16 themselves.

The first sensing unit 11 further comprises at least one proximity switch 17 engaged to the operating head 4 and activated by the retraction of the edge band 13, and consequently the whole case 12. The proximity switch 17 is adapted to send a stop signal to the oil-operated cylinder 6 and thereby stop lowering of the operating head 4. The relative position of the switch 17 to the case 12 is such that the stop signal is emitted even when the retraction of the edge band 13 is very reduced, always corresponding, at all events, to a position of the upper blade 5 within the case 12 itself.

The accident-preventing device 1 further comprises a pair of enabling members 18 adapted to activate the oil-operated cylinder 6 again, for completing the work stroke of the operating head 6 after it has been stopped.

The enabling members 18 are disposed spaced apart from the lower end of the operating head 4 and for their activation the intervention of the operator's two hands is required over the whole time needed for completing the work stroke.

In particular, the enabling members 18 are disposed spaced apart a safety distance from the upper blade 5, so that all risks of interference between the blade and any part of the operator's hands are eliminated.

In this first embodiment of the device 1 the enabling members 18 are embodied by two pushbuttons 18a engaged to the case 12 on opposite sides thereof.

The connecting means 14, in addition to enabling the first partial retraction of the case 12 relative to the operating head 4 are also capable of enabling a further retraction of the case 12 itself so that the upper blade 5 may emerge therefrom after intervention of the enabling members 18.

Advantageously in "gooseneck-shaped presses", the case 12 is divided into two halves 12a and 12b linked independently of each other to the operating head 4 by the connecting means 14.

In greater detail, each half 12a and 12b is engaged to the operating head 4 by means of a pair of connecting rods 15 and is provided at the lower part thereof with its own edge band 13. In this case, therefore, the first sensing unit 11 comprises two proximity switches 17, one for each half.

In the case of presses having two or more pillars, on the contrary, the case 12 is formed with a single half portion positioned before the cutting blade 5.

At all events, the case 12 may be advantageously made of transparent material, so that the operator can visually follow the whole cutting operation.

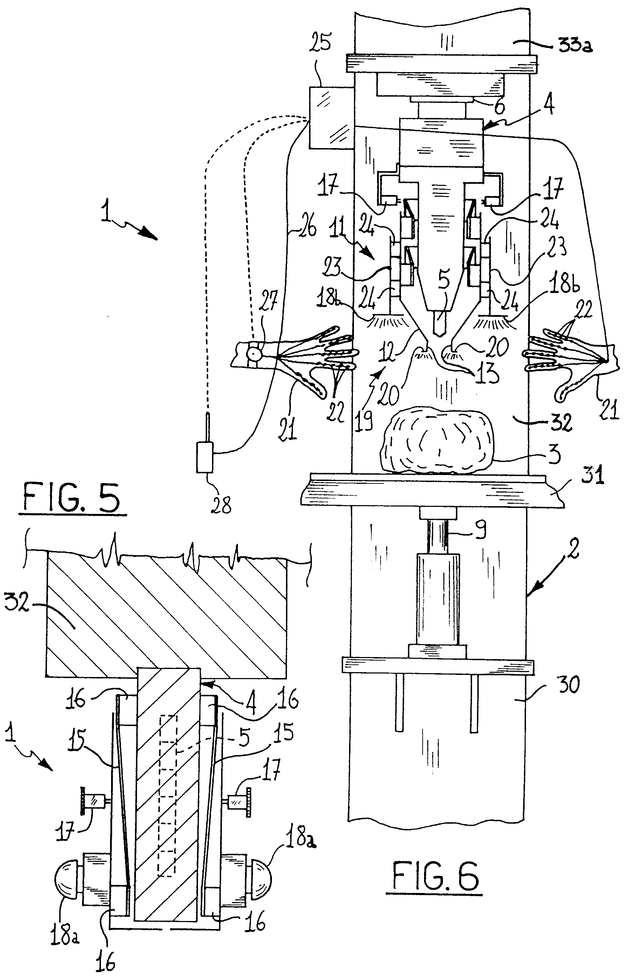

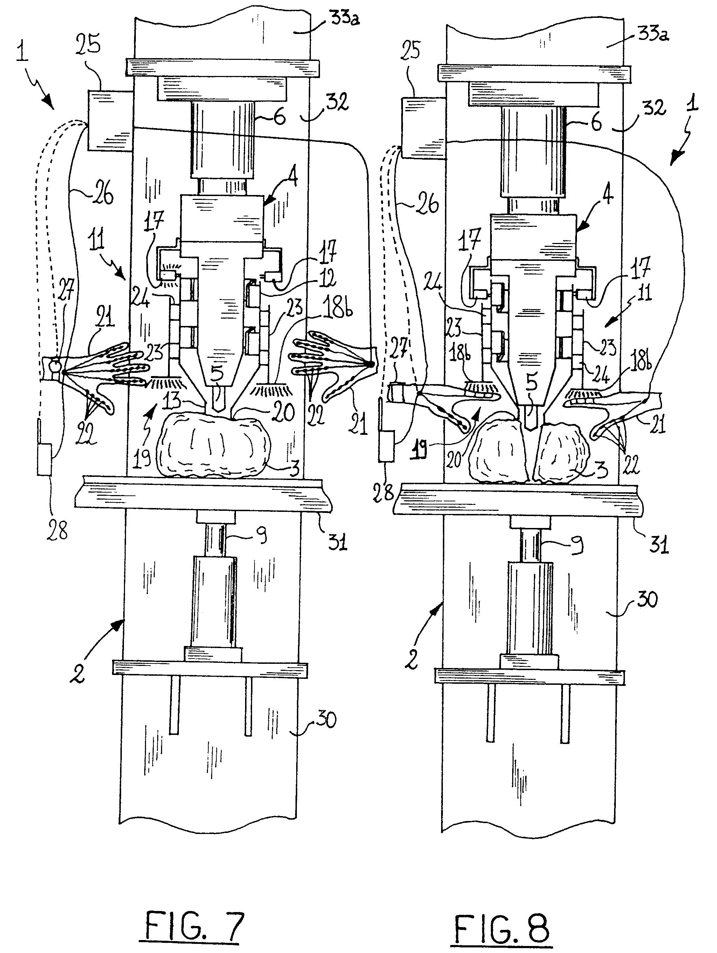

In a second embodiment shown in Figs. 6, 7 and 8, the device of the invention has a second sensing unit 19 comprising at least one second active portion 20 defined by a first magnetic sensor for example, and disposed at a lower edge of the first active portion, that is the edge band 13 of the case 12.

The second sensing unit 19 further comprises a pair of control and protection gloves 21 provided with metal plates 22 electrically connected with each other. The interference of one glove 21 with the second active portion 20 causes the emission of a stop signal by the glove itself for stopping the oil-operated cylinder 6.

The enabling members 18 in the second embodiment of the device 1 may consist of second magnetic sensors 18b engaged to the case 12 through supports 23, upon interposition of insulating elements 24.

By merely moving both control gloves 21 close to the second magnetic sensors 18b, a signal is sent for prosecution of the work stroke to an electronic read unit located within an electric panel 25.

Sending of signals from the control gloves 21 to the electric panel 25 can take place following different modalities. For example, a direct connection through an insulated electric cable 26 may be provided, or a wrist transmitter 27 of electromagnetic signals may be applied to the gloves 21, or yet an electric connection to a radiotransmitter 28 provided with an antenna may be envisaged.

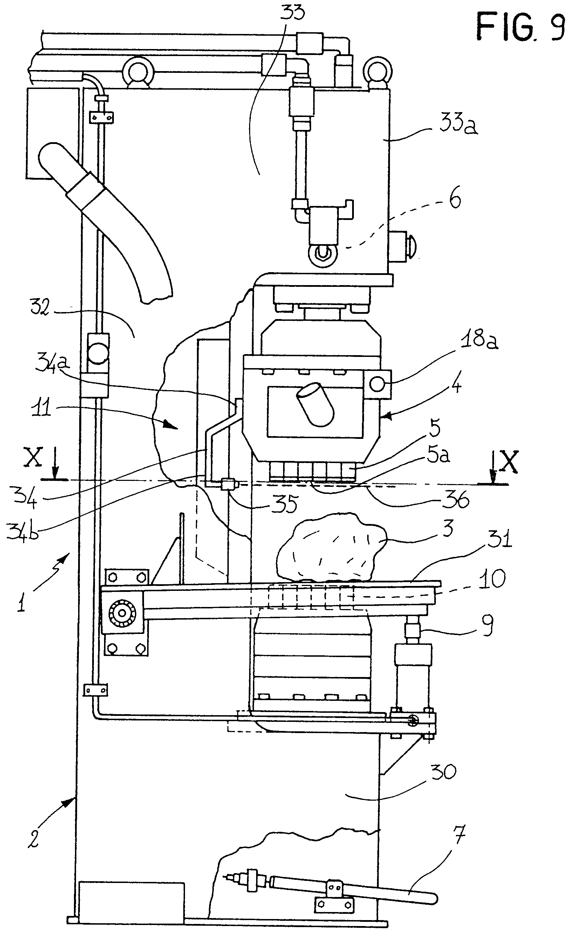

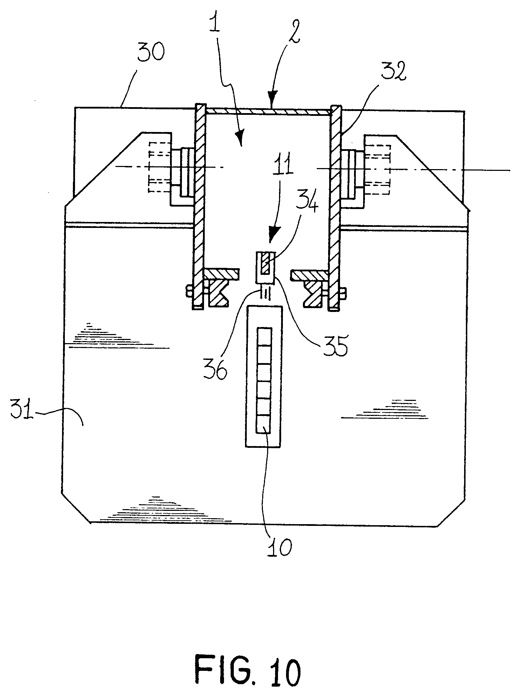

In a further and preferred embodiment of the present invention shown in Figs. 9 and 10, the first sensing unit 11 comprises at least one support arm 34 having one end 34a fastened to said operating head 4 and a second end 34b projecting downwardly beyond the operating head.

An optoelectric detector 35 is mounted to the second end 34b of the support arm 34, said detector defining said first active portion of the first sensing unit 11.

In greater detail, the optoelectric detector 35 is disposed in coplanar relation with the upper cutting blade 5, at a lower position relative to the same blade and offset with respect to the work area.

Said optoelectric detector 35 comprises a light emitter preferentially acting in the spectrum field of infrared waves, arranged to generate a light beam 36 substantially extending flush with a free edge 5a of said upper blade 5. In the case in which an obstacle, the workpiece 3 or an operator's hand for example, moves close to the upper blade 5, the light beam 36 generated by the emitter impinges on such an obstacle and is consequently reflected therefrom. The reflected beam, in turn, impinges on a photoelectric cell associated with the optoelectric detector 35 too, and responsive to the light generated by said emitter. Said photoelectric cell, as soon as it is lit by the light beam reflected from the obstacle, causes said stop signal to be sent for stopping the oil-operated cylinder 6.

In the same manner as in the above described first embodiment, in order to enable the operating head 4 to complete its downward work stroke thereby splitting the workpiece, the operator must act on the pushbuttons 18a located at opposite positions on the operating head.

Operation of an accident-preventing device according to the invention described above mainly as regards structure, is as follows.

Referring to the first embodiment, after the stone or workpiece 3 has been put on the workbench 8, lowering of the operating head 4 initially raised to its rest position (see Figs. 1 and 2) is caused.

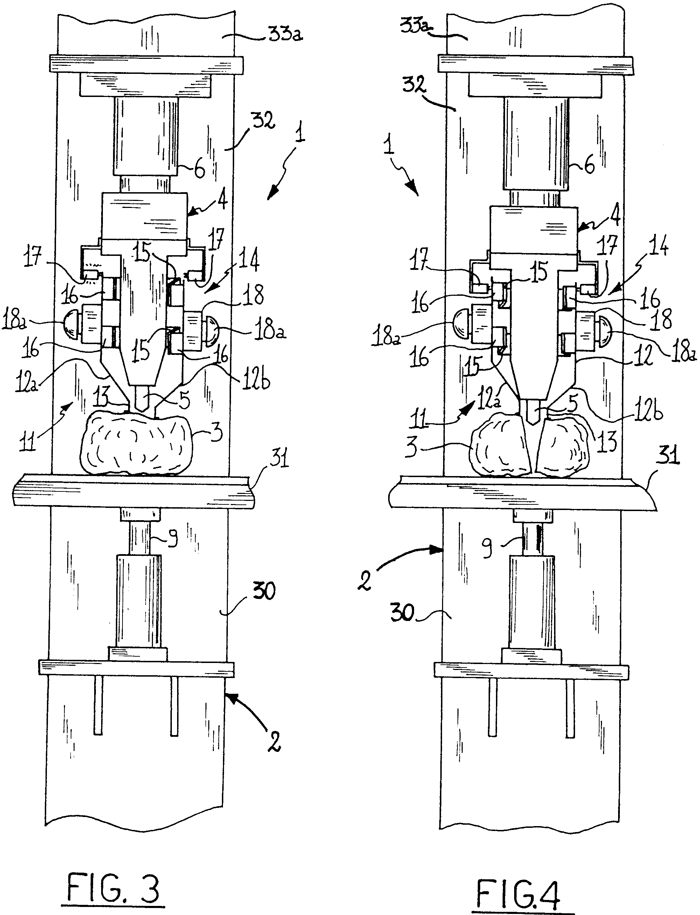

As soon as the lower edge band 13 of one of the half portions 12a or 12b comes into contact with the stone 3, the corresponding half portion bears against said stone and stops. The operating head 4 goes on its stroke over a short length until the relative retraction of the half portion actuates the respective proximity switch 17 that immediately stops further lowering of the operating head 4 (see Fig. 3). If the stone 3 has an uneven upper surface, that is higher and lower regions for example, the half portion put at the lower region may not undergo any relative retraction with respect to the upper blade 5. At all events this blade is always inside the protection case 12.

During this first lowering of the operating head 4, that is as far as the edge band 13 comes into contact with a stone 3, the operator has both his hands free and can use them for putting or better disposing the stone on the workbench. Practically, the operator can intervene under the operating head during the whole time that said head comes down without paying attention to this displacement, but exclusively attending to the positioning of the workpiece, because any interference of his hand or part thereof with the edge band 13 of the case 12 immediately stops the downward work stroke of the operating head 4.

Completion of the work stroke, that is further lowering of the upper blade 5 for carrying out the splitting step can only take place if the operator engages both his hands for operation of the two pushbuttons 18a (see Fig. 4).

In the second embodiment of the device 1, the operator wears the control gloves 21 and the initial lowering of the operating head 4 is carried out in the same manner as in the first embodiment, operation of which has been described above. Should one of the operator's hands, and exactly the glove he wears, slightly touch a first magnetic sensor 20, the immediate stopping of the operating head work stroke takes place, without the occurrence of the partial retraction of the case 12 and consequently the intervention of the proximity switch 17 being required. In conclusion, the first magnetic sensors 20 offer a further accident-preventing safety measure, in addition to the one provided in the first embodiment.

Prosecution of the work stroke can take place only if both gloves 21 are brought to slightly touch the second magnetic sensors 18b, that is if both hands are moved away from the intervening area of the upper blade 5.

In the two embodiments described, the connecting means 14 and in particular the elastically yielding elements 16, starting from the moment at which resting of the case 12 on the stone 3 occurs and over the whole time during which the work stroke is completed. constantly keep the protection case 12 in contact with the workpiece 3. In this manner the case 12 also performs the function of a hood for conveying and sucking dust developed during the working and is also a protection against splinters. In addition the case 12 may help in reducing the noise produced during the breaking step.

Finally, in the preferred embodiment of the invention, the first sensing unit has an optoelectric detector 35 acting under the operating head 6, in place of the case 12. In this case it is the optoelectric detector 35 that sends a stop signal to the oil-operated cylinder 6 when it detects the presence of one of the operator's hands or the workpiece. At this point, in the same manner as in the first embodiment, by acting on the control pushbuttons 18a the operator can cause further lowering of the head 6 for carrying out splitting of the workpiece.

The invention achieves important advantages.

It is pointed out in particular that the accident-preventing device of the invention greatly increases the production rate of hydraulic presses and in particular of shearing machines for stone-breaking workings, because it restricts the time of non-use of the operator's hands to that part of the work stroke which is really dangerous, that is the splitting step.

In addition, this splitting step is strictly defined by the device starting from the instant that the case or optoelectric detector interferes with the workpiece. Consequently, this splitting step is automatically made proportionate to the thickness in height of the workpiece. Therefore the operator is constantly guided in a safe manner when performing his task. As a result he undergoes reduced fatigue and stress.

Referring particularly to said preferred embodiment, it is to be pointed out that no part of the control device 1 is directly in contact with the workpiece 3 and therefore the mechanical wear of the device is substantially zero.

## Claims

1. An accident-preventing control device for oil-operated presses and the like, in particular for stone-breaking workings, said presses (2) comprising:
- a fixed base (30) provided with a workbench (31) on which a workpiece (3) is disposed;
- an operating head (4) engaged to said fixed base (30) and vertically movable with a reciprocating motion consisting of a downward work stroke against the workpiece (3) and an upward return stroke;
- actuating means for the operating head (4); and
- a control pedal (7) for said actuating means, characterized in that it further comprises:
- at least one sensing unit (11) comprising at least one active portion disposed close to a lower end of said operating head (4) , said sensing unit (11) sending a stop signal to said actuating means in the presence of an obstacle interferring with said first active portion during said work stroke, and
- a pair of enabling members (18) disposed spaced apart from said lower end of the operating head (4) and activating said actuating means again, upon intervention of the operator's both hands, in order to complete said work stroke of the operating head (4).

2. A device according to claim 2, characterized in that said first sensor unit (11) comprises:
- at least one support arm (34) having one end (34a) fastened to said operating head (4) and a second end (34b) projecting downwardly beyond said operating head (4) , and
- an optoelectric detector (35) mounted to said second end (34b) of the support arm (34) and defining said first active portion.

3. A device according to claim 2, characterized in that said optoelectric detector (35) is disposed in coplanar relation with an upper blade (5) carried by said operating head (4) at the lower part thereof, said detector generating a light beam (36) extending substantially flush with a free edge (5a) of said upper blade (5).

4. A device according to claim 1, characterized in that said first active portion of the first sensing unit (11) projects downwardly from said lower end of the operating head (4) and can be retracted relative to the operating head (4) upon contact with said obstacle, against the action of at least one elastically yielding element, and in that said first sensing unit (11) comprises at least one proximity switch (17) operated by the retraction of said first active portion for sending said stop signal.

5. A device according to claim 4, characterized in that said first sensing unit (11) comprises a protection case (12) for said operating head (4) which at the lower part thereof exhibits an edge band (13) defining said first active portion, and in that provision is made for connecting means (14) comprising said elastically yielding elements adapted to engage said protection case (12) to said operating head (4) and to enable the retraction of said case (12) relative to the operating head (4) upon contact with said obstacle and the completion of said work stroke after invervention of said enabling members (18), said lower edge band (13) being constantly held in contact with said workpiece (3).

6. A device according to claim 5, characterized in that said protection case (12) consists of at least two halves (12a, 12b) linked to said operating head (4), independently of each other, by said connecting means (14), each half (12a, 12b) exhibiting said active portion, and in that one of said proximity switches (17) is provided for each of said halves (12a, 12b).

7. A device according to claim 6, characterized in that said connecting means (14) comprises, for each half (12a, 12b), a pair of connecting rods (15) engaged between said halves and operating head (4), and rotating engagement members (16) acting between first end portions of said connecting rods (16) and said halves (12a, 12b) and between second end portions of said connecting rods (15) and said operating head (4), said rotating engagement members (16) comprising said elastically yielding elements active in a torsional direction.

8. A device according to claim 5, characterized in that said enabling members (18) are embodied by two pushbuttons (18a) engaged to said case (12) sideways and on opposite sides thereof.

9. A device according to claim 1, characterized in that a second sensing unit (19) is provided which comprises:
- at least one second active portion (20) located at a lower edge of said first active portion, and
- a pair of control gloves (21), each adapted to emit at least said stop signal for said actuating means, following the interference with said second active portion (20).

10. A device according to claim 9, characterized in that said enabling members (18) are defined by sensor elements (18b) activated by said control gloves (21) when said control gloves (21) are moved close thereto.

11. A device according to claim 5, characterized in that a second sensing unit (19) is provided which comprises:
- at least one second active portion (20) disposed at said lower edge band (13) of said protection case (12),
- a pair of control gloves (21) each adapted to emit at least said stop signal for said actuating means, following the interference with said second active portion,
- said enabling members (18) being embodied by sensor elements (18b) engaged to said case (12) sideways and on the opposite sides thereof and activating said control gloves (21) when the latter are moved close thereto.

12. A device according to claim 5, characterized in that said case (12) is made of transparent material.
